# EUROPEAN PATENT SPECIFICATION

(11) **EP 0 498 982 B1**
(45) Date of publication and mention of the grant of the patent: **27.12.1995**
(21) Application number: 91301226.6
(22) Date of filing: 15.02.1991
(51) Int. Cl.: F16C 25/04

(54) **Bearing arrangement with a backlash absorbing system**
Lageranordnung mit einem Spielabsorptionssystem
Arrangement de palier avec dispositif d'absorption de jeu

(43) Date of publication of application: 19.08.1992
(73) Proprietor: YOKOI INDUSTRIES INC.,, Higashi-Osaka City Osaka-fu (JP)
(72) Inventor: Yokoi, Junichi, Higashi-Osaka City, Osaka-Fu (JP)
(74) Representative: JENSEN & SON

(56) References cited:
- CH-A- 479 819
- DE-C- 864 485
- FR-A- 520 721
- FR-A- 1 181 059
- FR-A- 2 278 983

## Description

### BACKGROUND OF THE INVENTION

### 1. Field of the Invention

The present invention relates to a backlash absorbing or preventing system for bearings which functions to support shafts, stems, axles or any other similar machine elements arranged to be vertically or horizontally swung or rotated.

### 2. Description of the Prior Art

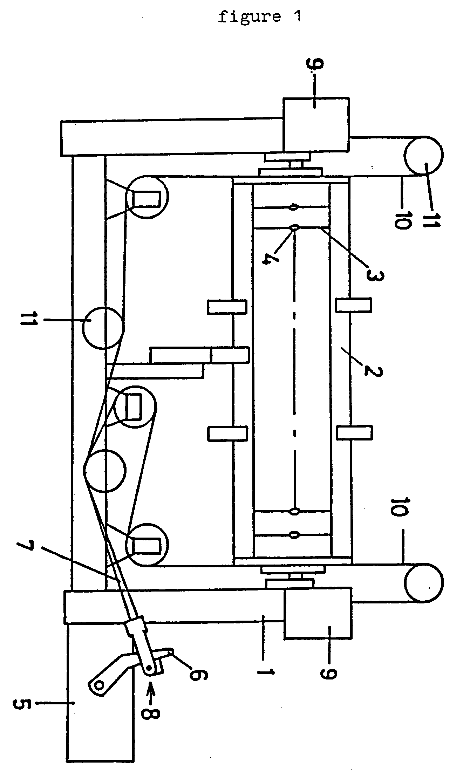

Shafting which has swinging or rotating motion is widely used in, for example, automobile engines, marine engines, wire connectors in weaving machines, and many other machine components. In general, such shafting is supported upon a bearing. As a result, the journal portion of the shafting and the internal mating portion of the bearing, or the internal circumferential surface of the bushing thereof are inevitably worn out owing to and during the swinging or rotating movement of the shafting, whereby the shafting is caused to undergo a backlash or lost motion within and relative to the bearing. In, for example, a negative type weaving machine such as illustrated in Figure 1 which is a schematic elevational view of the overall arrangement thereof, a wire connector 8 is connected in one end thereof to connecting wires 7 which connect a shedding motion 5 and a harness frame 2 to each other, while on the other hand, the wire connector 8 is engaged with a shedding lever 6 of the shedding motion 5. In this case, the shedding motion is exemplified in the form of a cam machine. In order to allow the engagement of the wire connector 8 with the shedding lever, the wire connector is usually provided with a bracket which comprises a pair of spaced-apart side plates, and a lever engaging member is arranged between both side plates. With such an arrangement, the shedding lever of the shedding motion is inserted between the side plates of the wire connector, and is firmly mated with the lever engaging member. This engaging member comprises a bearing means, and the bearing means has a supporting shaft pivotally supported thereacross.

A long-term operation of the foregoing type weaving machine arranged as described in the foregoing subjects the outer circumferential surface of this supporting shaft and the inner peripheral surface of the bearing means to wear or abrasion therebetween particularly in each connecting wire side portion. The reason why the supporting shaft and the bearing means are worn out or abraded particularly in their portions adjacent to the connecting wires is that external force acts concentrically upon such portions of the supporting shaft and the bearing means when the weaving machine is in operation.

If the outer circumferential surface of the supporting shaft and the inner circumferential surface of the bearing means are thus worn out or abraded, a backlash is introduced between the supporting shaft and the bearing means as described in the foregoing. In the foregoing type weaving machine, such a backlash causes the supporting shaft to be reciprocatively moved horizontally or vertically in proportion to the backlash of the supporting shaft relative to and within the bearing means as a result of the swinging movement of the shedding lever, and an extreme vibration or shake occurs in the connecting wire joined to the wire connector in which the supporting shaft and the bearing means are provided. This causes the connecting wires to undergo great impact force and consequently to be slackened. If the slack of the connecting wires become greater with the operation of the weaving machine, the connecting wires are subjected to vibration and impact force which are also proportionally still more increased. As a result, the connecting wires undergo the trouble of their rupture. This disadvantage is more conspicious in weaving machines of recent years which are operated at a far higher speed.

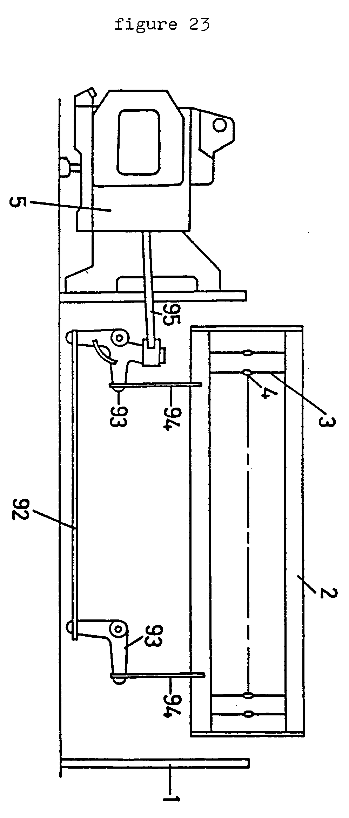

The weaving machine is also available with the positive type as well as the foregoing negative type. In a positive type weaving machine such as shown in Figure 23, a pair of interlocking leverage means 93, 93 of a L-shaped configuration are connected to each other by using a horizontal linking rod 92, and are joined to the harness frame 2 through vertical linking rods 94, 94. The left-hand side one of both interlocking leverage means 93 is connected to the shedding motion 5 by means of an actuating linking rod 95 through the shedding lever (not shown).

The leverage means are arranged to pivot about the supporting shafts 16. The supporting shafts are worn out or abraded as well as mating bearing means provided in the leverage means while the weaving machine including the leverage means is operated over a long period of time. A backlash is thus created between the supporting shaft and the bearing means also in the positive type weaving machine. This causes the shedding motion to fail to achieve a predetermined amount of warp shedding, and any resulting sheds in the warps are decreased in size. Also, the backlash between the supporting shaft and the bearing means introduces vibration and noises in the operation of the weaving machine.

The negative type and the positive type weaving machine are respectively subjected to a backlash between the shafting and the mating bearing means as described in the foregoing.

Such a backlash is not limited in the occurence thereof to the weaving machines. For example, the automobile engines and the marine engines also respectively undergo this kind of backlash.

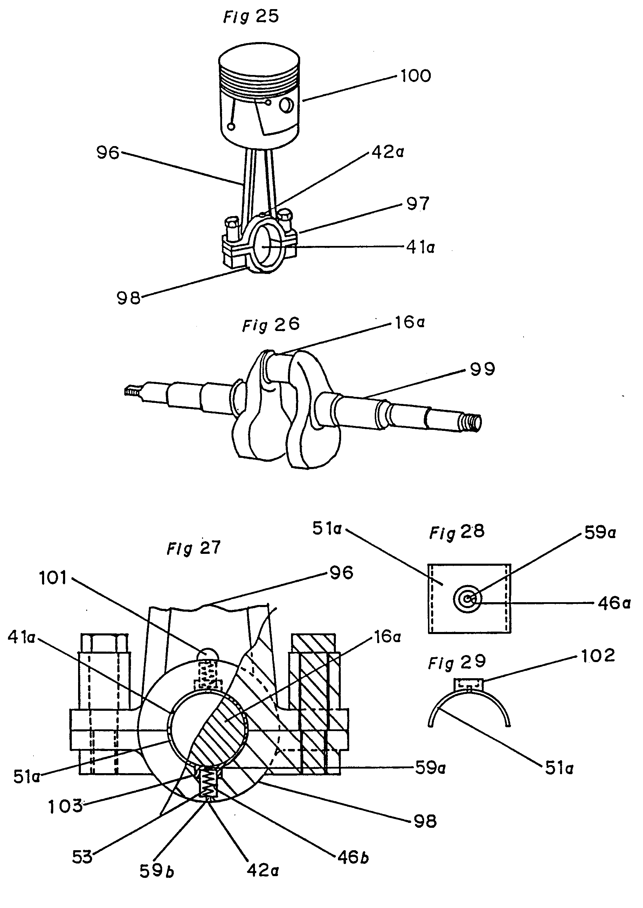

As illustrated in Figure 25, the automobile engines and the marine engines respectively comprise a piston 100 and a connecting rod 96 in addition to a cylinder (not shown). The connecting rod 96 is provided with a big end portion 97 having a semi-circular configuration, and forms a bearing inserting aperture 41a with a bearing cap 98. In Figure 26, a crankshaft 99 is shown which comprises a crankpin 16a, and this crankpin 16a is inserted through the bearing inserting aperture 41a. The bearing inserting aperture 41a is fitted with a bearing metal on the inner circumferential surface thereof. A backlash is created between the crankpin 16a and this bearing metal.

This backlash causes the automobile engines and the marine engines to undergo critical trouble in which the piston stroke is not accurately reflected in the rotation of the automobile wheel and the marine propeller. Also, the backlash between the crankpin and the bearing metal in the bearing inserting aperture of the connecting rod makes much more noises in the operation of the automobile and marine engines. Moreover, this backlash threatens damage of the crankpin.

As is apparent from the foregoing description of some examples, the mechanical engagement of the shafting and the mating bearing means with each other is inevitably subjected to a backlash as a result of their wear or abrasion. However, in spite of this fact, the prior art has not made any system or provisions for absorbing or preventing a backlash in such a mechanical engagement. It is known to try and hold bearings in close contact with a shaft by spring means. Such means are shown in FR 520721 and FR 2278983 which respectively show a bearing arrangement according to the respective preamble of claims 1 and 2. These do not however disclose a system for preventing backlash. For this reason, some backlash absorbing useful system or means has been desired to be provided for bearings in many mechanical industries.

### SUMMARY OF THE INVENTION

It is a primary aim of the present invention to provide backlash absorbing or preventing system or means for bearings, in which the foregoing disadvantages and problems of the conventional bearing means which function to support the shafting thereon are overcome.

According to the present invention there is provided a bearing arrangement with a backlash absorbing system comprising an attaching member with a bearing inserting aperture, a bearing system unrotatably fitted in the bearing aperture, and a shaft subjected to diametrical external force, which is rotatably supported on the bearing system;
the bearing system comprising:
a fixed bushing which is located more adjacently than the shaft to a portion thereof on which the external force acts and is fixed within the bearing inserting aperture,
a movable bushing which cooperates with the fixed bushing to hold the shaft, and is allowed to advance or retreat relative to the fixed bushing, and
springs which allow the movable bushing to approach the fixed bushing; characterised in that both circumferential ends of the fixed bushing are spaced from the opposed circumferential ends of the movable bushing so as to define two gaps between the bushings,
each bushing has a lubricant guiding groove which extends from one of the circumferential ends to an end wall proximate the other circumferential end, such that the lubricant guiding grooves are open to one gap and closed with respect to the other gap, and the attaching member includes lubricant supply means to supply lubricant via said one gap to the two lubricant guiding grooves.

Alternatively, a plate spring of small thickness may be employed in the place of the springs. In this case, the plate spring is located to surround the outer peripheral surfaces of the fixed and movable bushings.

Moreover, a lubricant supply bushing may be located between the fixed bushing and the movable bushing, and this lubricant supply bushing may be formed with a lubricant feeding hole which feeds a lubricant to the outer circumferential surface of the shaft. In connection with this, the attaching member in which the bearing inserting aperture is made is provided with a lubricant hole to supply a lubricant to the lubricant feeding hole of the lubricant supply bushing.

The present invention further provides a bearing arrangement with a backlash absorbing system in a bearing system comprising an attaching member with a bearing inserting aperture, the bearing system being unrotatably fitted in the bearing aperture, and a shaft, which is rotatably supported on the bearing system; the bearing system comprising:
a pair of movable bushings which cooperate with each other to hold the shaft therebetween, and
pressure springs which allow both movable bushings to approach each other, both circumferential ends of one movable bushing being spaced from the opposed circumferential ends of the other movable bushing so as to define two gaps between the bushings; characterised in that each bushing has a lubricant guiding groove which extends from one of the circumferential ends to an end wall proximate the other circumferential end, such that the lubricant guiding grooves are open to one gap and closed with respect to the other gap, and
the attaching member includes lubricant supply means to supply lubricant via said one gap to the two lubricant guiding grooves.

In the preceding embodiment of the invention, a lubricant feeding bushing may be also provided between a pair of movable bushings, and as described in the foregoing embodiment in which the fixed bushing is used for one of both bushings which function to hold the shaft therebetween, this lubricant feeding bushing may be formed with a lubricant supplying hole which feeds a lubricant to the outer circumferential surface of the shaft. Also, as described in the foregoing, in order to supply a lubricant to the lubricant supplying hole of the lubricant supply bushing, a lubricant hole is made in the attaching member in which the bearing inserting aperture is made.

The lubricant guiding groove may be ramified in the longitudinal middle thereof into two sub-grooves.

In operation, if the inner circumferential surface of the bearing system provided by the present invention and the outer circumferential surface of the shaft rotatably supported thereacross are respectively worn out or abraded, the backlash absorbing system according to the present invention allows the movable bushing or bushings to move positively in the direction of the shaft, thereby achieving the prevention of a backlash between the shaft and the bearing system.

### BRIEF DESCRIPTION OF THE DRAWINGS

The present invention will be described with reference to the accompnaying drawings, in which:
Figure 1 is a schematic elevatonal views showing the overall arrangement of a negative type weaving machine provided with a wire connector which includes the bearing system according to a first preferred embodiment of the present invention;
Figure 2 is a partially cross sectional side view of a principal portion of the weaving machine shown in Figure 1;
Figure 3 is a plan view of Figure 2;
Figure 4 is an exploded view of an attaching member and the bearing system formed therein according to the first preferred embodiment of the present invention;
Figure 5 is a cross sectional view of the bearing system according to the first preferred embodiment of the present invention;
Figure 6 is a cross sectional view taken along the line A - A of Figure 5;
Figure 7 is a cross sectional view taken along the line B - B of Figure 5;
Figure 8 is a cross sectional view taken along the line C - C of Figure 5;
Figure 9 is a cross sectional view taken along the line D - D of Figure 5;
Figure 10 is a cross sectional view taken along the line E - E of Figure 5;
Figure 11 is a cross sectional view taken along the line F - F of Figure 5;
Figure 12 is a cross sectional view taken along the line G - G of Figure 5;
Figure 13 is a cross sectional view taken along the line H - H of Figure 5;
Figure 14 is a cross sectional view taken along the line J - J of Figure 5;
Figure 15 is a side view of a fixed bushing which shows a second preferred embodiment of the present invention;
Figure 16 is a partially cross sectional side view of the bearing system according to a third preferred embodiment of the present invention;
Figure 17 is a longitudinal section view of the bearing system;
Figure 18 is a cross sectional view taken along the line K - K of Figure 17;
Figure 19 is a side view of the bearing system according to a fourth preferred embodiment of the present invention;
Figure 20 is a longitudinal sectional view of the bearing system according to a fifth preferred embodiment of the present invention;
Figure 21 is cross sectional view taken along the line L - L of Figure 20;
Figure 22 is a side view of the bearing system according to a sixth preferred embodiment of the present invention;
Figure 23 is a schematic elevational view showing the overall arrangement of a positive type weaving machine in which leverage means incorporate the bearing systems according to a seventh preferred embodiment of the present invention;
Figure 24 is a partially sectional side view of the bearing system according to the seventh preferred embodiment of the present invention;
Figure 25 is a perspective view which explains the assembled state of a piston and a connecting rod of a general type automobile or marine engine;
Figure 26 is a perspective view of a crankshaft comprising a crankpin which is to be attached to the connecting rod shown in Figure 25;
Figure 27 is a partially sectional elevational view of the big end portion of the connecting rod and a cap mated therewith, in which a bearing system with a different lubricant feeding system which is not in accordance with the present invention is inserted through a bearing inserting aperture formed at the big end portion of the connecting rod by using the cap;
Figure 28 is a plan view of a movable bushing provided with a lubricant feeding hole and a pressure spring hole for a bearing system as shown in figure 27; and
Figure 29 is a side view of the movable bushing as shown in Figure 28.

### DETAILED DESCRIPTION OF THE PREFERRED EMBODIMENTS

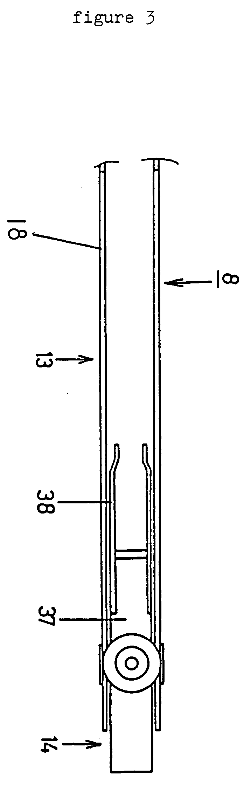

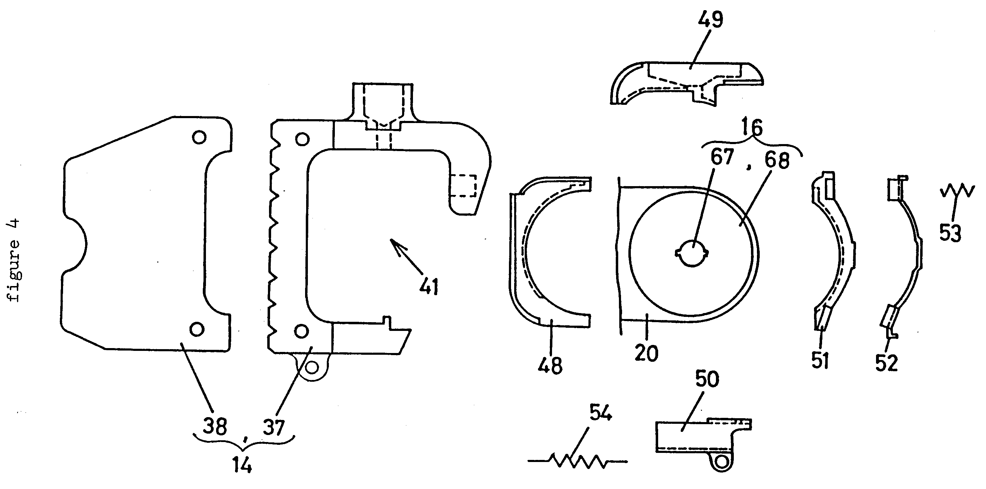

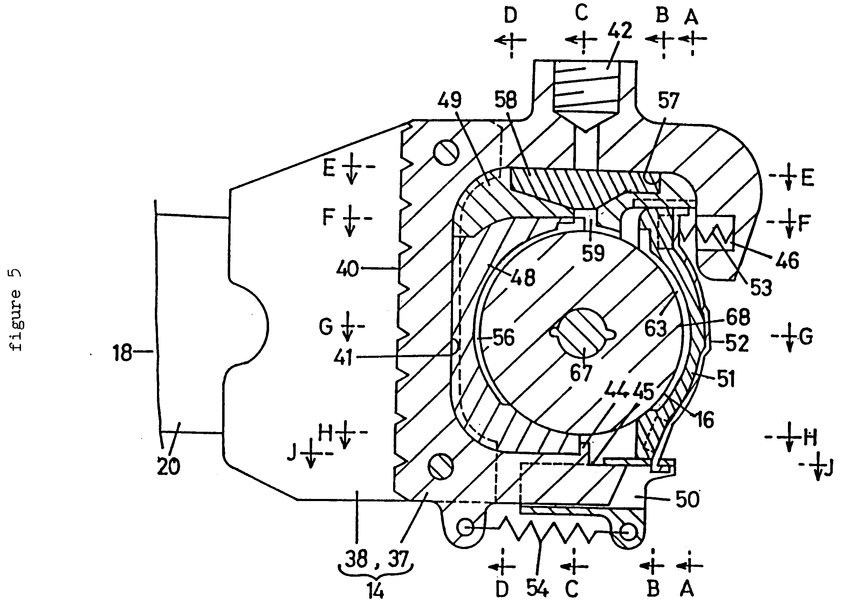

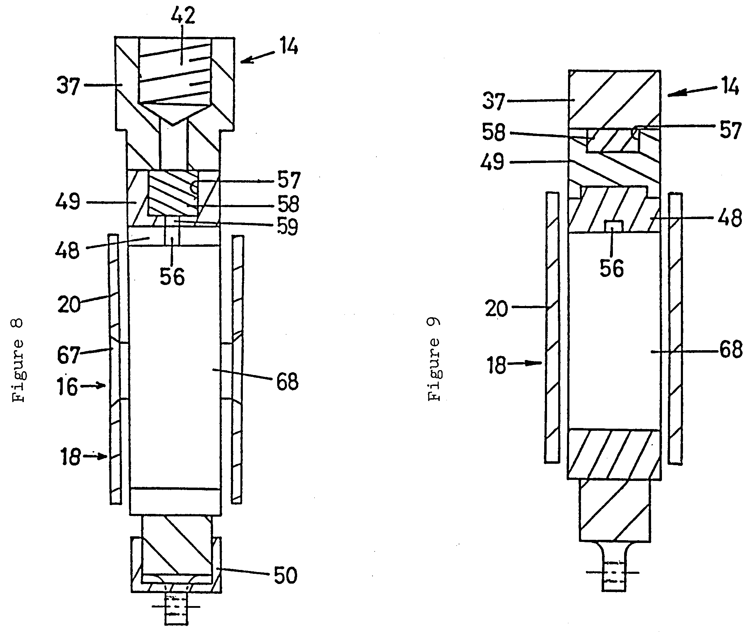

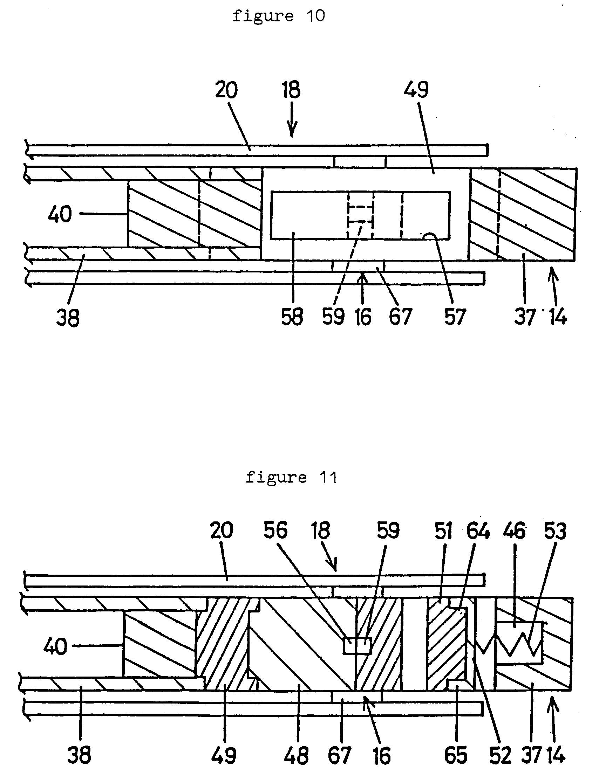

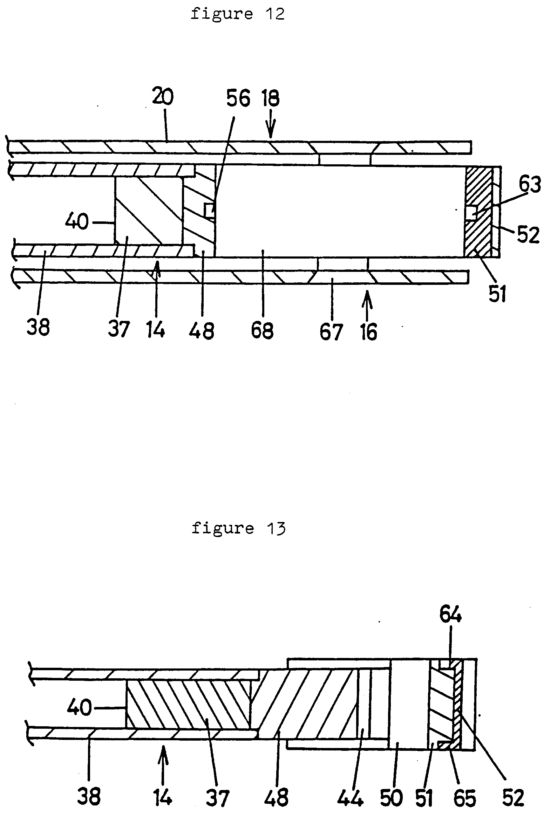

The first preferred embodiment of the bearing system according to the present invention will be described with reference to Figures 1 to 14.

Figure 1 shows one harness frame 2 which is vertically movable within a frame 1 of a weaving machine. A plurality of such harness frames 2 extend horizontally within the frame 1 and each harness frame 2 is provided with a large number of heddles 3 which are vertically aligned with each other. Each heddle 3 is provided with a warp passing eye or male 4 located centrally therein.

A shedding motion 5 for the weaving machine is a cam machine in this embodiment of the invention, and this cam machine is located in a lower outside portion of the machine frame 1 of the weaving machine. Extending from the shedding motion are a great number of shedding cam levers 6 in parallel and in proximity which pivot about a horizontal axis extending into the plane of Figure 1. Each shedding cam lever 6 is connected with the right-hand side and the left-hand side lower edge portion of the harness frame 2 through connecting wires 7 and a wire connector 8. Located on the left-hand side and the right-hand side upper portion of the harness frame are a pair of pulling means 9 which draw the harness frame 2 upwardly by means of connecting wires 10. Pulleys 11 are supported for rotation on the upper and the lower portion of the machine frame 1 to guide the upper connecting wires 10 and the lower connecting wires 7.

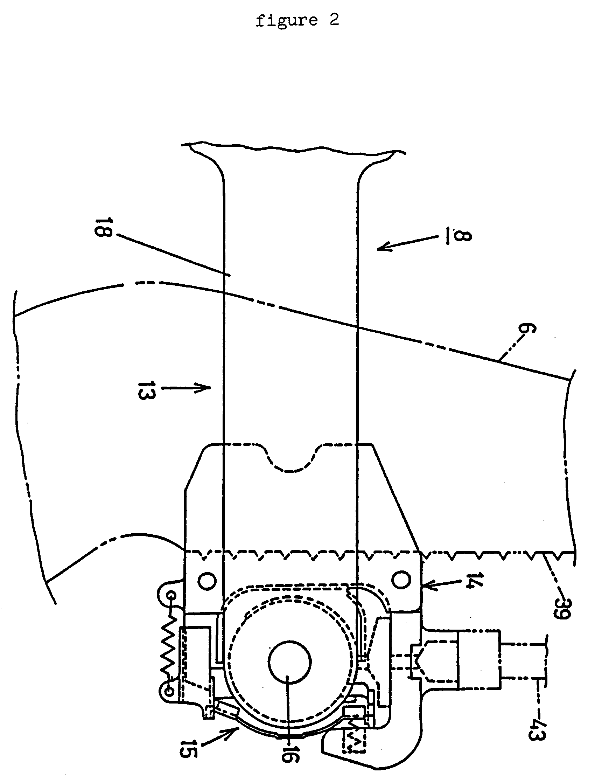

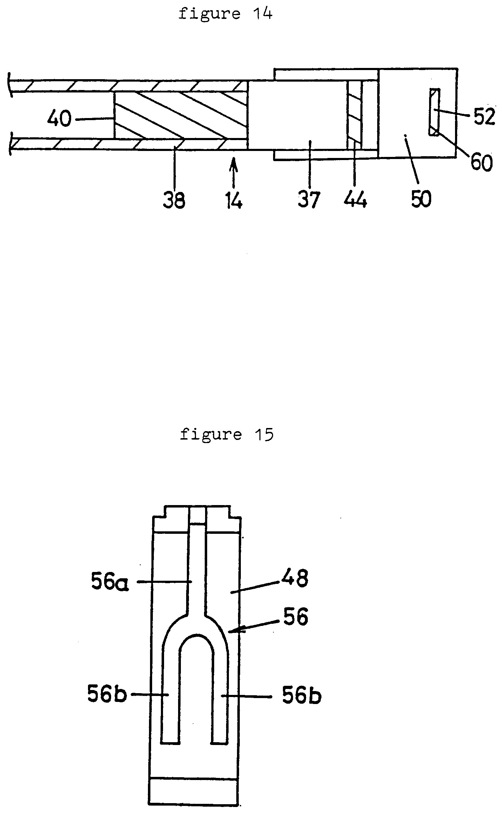

As shown in Figures 2 and 14, the wire connector comprises a bracket 13, an attaching member 14, a bearing system 15, and a supporting shaft 16.

The bracket 13 is preferably made of sheet metal and comprises a pair of spaced-apart side plates 18. The side plates 18 are connected to the connecting wire at their one ends, and both side plates 18 have an attaching member 14 pivotally held therebetween at their opposite free end by using a supporting shaft 16 which rests upon a bearing system 15.

The attaching member 14 is engaged with the shedding cam lever 6 of the shedding motion 5, and comprises a body member 37 and a pair of side plates 38 which extend from the left-hand end portion of the body member 37 in the direction of the bracket end at which the connecting wires 7 are connected to the bracket.

The left-hand end surface of the body member 37 is formed with an engaging surface 40 which is detachably engaged with a serrated mating surface 39 of the shedding cam lever 6 such that the shedding cam lever can be vertically adjusted in the engaging position thereof with the serrated mating surface 39, thereby allowing the harness frame to adjust the warp shedding size thereof. The body member 37 is hollow in the inside thereof to form a bearing inserting aperture 41 therein which is opened on the left-hand side end portion thereof. This aperture 41 comprises a top wall portion, a bottom portion, a side wall portion which connects the left-hand side end portions of the top wall portion and a side wall portion with each other, and a drooping portion which extends downwardly from the right-hand side end portion of the top wall portion.

The top wall portion of the body member 37 is provided with a lubricant hole 42 in the longitudinally central portion thereof, and this lubricant hole has a lubricant feeding pipe 43 detachably screwed thereto as shown in Figure 2. The bottom wall portion of the body member 37 is formed with an upwardly projecting portion 44 and a recessed portion 45 in the end portion thereof. The drooping portion of the body member 37 has a spring insertion groove 46 made from the inner peripheral surface thereof toward the outer peripheral surface thereof.

The body member 37 is recessed from the outer surfaces thereof in the side portion thereof in which the side plates 38 are attached thereto, whereby the outer surfaces of the side plates 38 become flush with those of the body member 37 when the side plates 38 are attached to the outer surfaces of the body member 37.

The bearing system 15 is detachably inserted in the bearing attaching aperture 41 of the attaching member 14, and comprises a fixed bushing 48, a lubricant supply bushing 49, an engaging member 50, a movable bushing 51, a slider means 52, and a pressure spring 53, and a tension spring 54. The slider means 52, the pressure spring 53, and the tension spring 54 are all made of metal, the other members of Nylon.

The fixed bushing 48 is secured within the bearing inserting aperture 41. This fixed bushing 48 is brought in contact with the inner peripheral surface of the bearing inserting aperture 41 around the lower portion of the side wall portion of the body member 37 and in the left-hand side portion of the bottom wall portion of the body member 37. The fixed bushing 48 is also brought in abutment with the projecting portion 44, to thereby prevent movement of the fixed bushing 48 toward the right-hand side. The fixed bushing 48 is formed with a lubricant guiding groove 56 along the inner peripheral surface thereof except for the lower portion thereof.

The lubricant supply bushing 49 is brought in contact with each inner peripheral surface of the top wall portion, the upper portion of the side wall portion, and the upper portion of the drooping portion in the body member 37, while at the same time, this lubricant supply bushing is also brought in abutment with the upper surface of the fixed bushing 48. The fixed bushing 48 and the lubricant supply bushing 49 are arranged to lock within the bearing system 15 by using the side plates 38 of the attaching member 14 so that these bushings are prevented from their detachment from the inside of the bearing system.

The fixed bushing 48 and the lubricant supply bushing 49 are respectively recessed from their outer surfaces in their side portions which have the side plates 38 brought into contact with them, whereby the outer surfaces of the side plates 38 become flush with those of the fixed bushing 48 and the lubricant supply bushing 49 when the side plates 38 are attached to the outer surfaces of the fixed bushing 48 and the lubricant supply bushing 49.

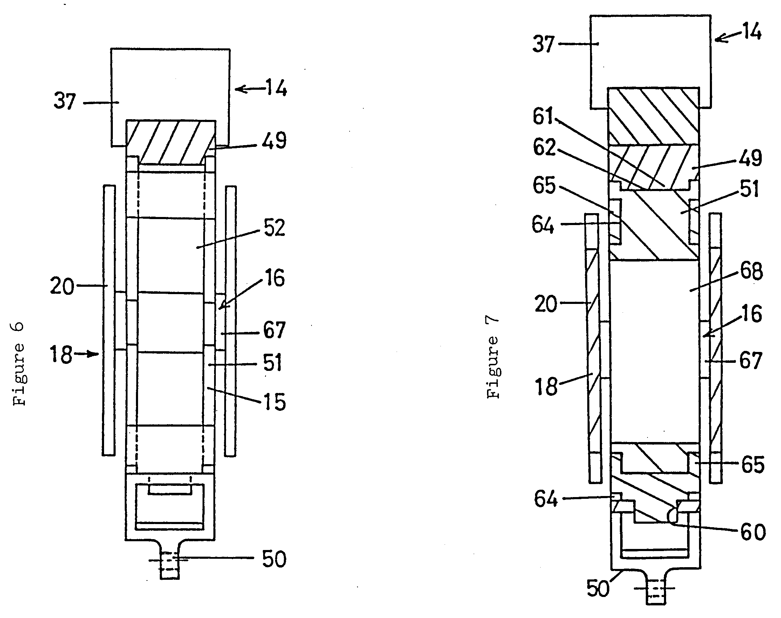

The lubricant supply bushing 49 is engaged in the left-hand side lower surface thereof with the upper surface of the fixed bushing 48 to prevent any transversal movement of both bushings 48 and 49 relative to each other. Also, the lubricant supply bushing 49 is formed with a downwardly projecting portion 61, as shown in Figure 7, and this projecting portion 61 is mated with a recessed portion of the movable bushing 51.

Moreover, the lubricant supply bushing 49 is provided with a lubricant reserving groove 57 of elongated rectangular shape which is communicatively connected to the lubricant hole 42 of the body member 37. This lubricant reserving groove 57 has a lubricant retaining member 58 held therein to keep the lubricant retaining member infiltrated with a lubricant. A sponge, cotton or any other similar material is used for the lubricant retaining member 58.

The lubricant reserving groove 57 is formed with a downwardly extending lubricant feeding hole 59 through the bottom portion thereof. This lubricant feeding hole 59 is communicatively connected in the lower portion thereof to a lubricant guiding groove 56 extending along the inner peripheral surface of the fixed bushing, while at the same time, the lower portion of the lubricant feeding hole 59 is opened in the right-hand side thereof.

The engaging member 50 is formed in a configuration of square pillar, and is substantially free from the upper wall portion thereof except for the right-hand side end portion thereof, and is inserted in the bottom wall portion of the body member 37 such that the engaging member can be horizontally moved. The right-hand side upper wall end portion of the engaging member 50 is engaged with the recessed portion 45 of the bottom wall portion of the body member 37. An upper wall portion of small width which is formed at the right-hand side end portion of the engaging member 50 and the upwardly projecting portion 44 in the bottom wall portion of the body member 37 forms a horizontal spacing co-jointly therebetween. Also, the engaging member 50 is formed with an engaging groove 60 in the upper wall portion of small width.

The movable bushing 51 is opposed to the fixed bushing 48 such that the movable bushing is allowed to freely advance or retreat, and cooperates with the fixed bushing 48 and the lubricant supply bushing 49 to hold the supporting shaft 16 rotatably. The upper end portion of the movable bushing 51 and the lower end portion of the lubricant supply bushing form a horizontal spacing therebetween, and the upper end portion of the movable bushing 51 is formed with an engaging recessed portion 62 which is meshed with the downwardly projecting portion 61 of the lubricant supply bushing 49 such that the engaging recessed portion 62 can be horizontally moved. Also, the lower end surface of the movable bushing is brought in contact with the upper surface of the engaging member 50 such that the lower end surface can be horizontally slid. The inner peripheral surface of the movable bushing is formed with a lubricant guiding groove 62 substantially over the whole thereof. This lubricant guiding groove is fed with a lubricant from the lubricant feeding hole 59 which extends from the bottom of the lubricant supply bushing 49. The movable bushing 51 is provided with a recessed portion 64 on each side of the right-hand side end portions of the upper and the lower end portions thereof.

The slider means 52 is brought in contact with the outer peripheral surface of the movable bushing 51. The upper end portion of the slider means 52 is brought in slidable abutment with the downwardly projecting portion 61 of the lubricant supply bushing 49, while at the same time, the slider means is detachably engaged in the lower end portion of a L-shaped configuration thereof with the engaging groove 60 of the engaging member 50. Also, the upper and the lower end portion of the slider means 52 are respectively formed with a pair of engaging pieces 65 on the respective both sides. These engaging pieces 65 are disengageably meshed with the insides of the recessed portions 64.

The pressure spring 53 is inserted between the bottom surface of the spring inserting groove 46 and the upper portion of the slider means 52, and forces the slider means 52 and the movable bushing 51 in the direction of the fixed bushing 48.

The tension spring 54 is inserted between the bottom wall portion of the body member 37 and the engaging member 50, to thereby draw the slider means 52 and the movable bushing 51 towards the fixed bushing 48.

The supporting shaft 16 is pivotally held by means of the bearing system 15, and comprises an inner metal shaft element 67 and an outer shaft element 68. The inner metal shaft element is expanded or peened over at both end portions thereof to fix it to both side plates 18 of the bracket 13 and the outer shaft element 68. The inner metal shaft element 67 is engaged in the outer circumferential surface thereof with the side plates 18 and the inner circumferential surface of the outer shaft element 68 such that the inner metal shaft element 67 and the outer shaft element are prevented from rotating relative to each other to obviate any wear or abrasion of these shafts elements 67 and 68. The outer shaft element 68 is made of metal or from ceramics.

In operation, according to the foregoing preferred embodiment of the present invention, each harness frame 2 is drawn upwardly by means of the pulling means 9, and if any desired one of the shedding cam levers 6 in the shedding motion 5 is counterclockwise swung, the harness frame 2 corresponding to the swung cam lever 6 is drawn downwardly, and as a result, warps passing through the males of the heddles in this harness frame 2 are accordingly pulled downwardly, whereby warps thus pulled downwardly form sheds with respect to other warps, and a weft is cast through the sheds thus formed.

A lubricant fed into the lubricant reserving groove 57 of the lubricant supply bushing 49 in the bearing system from the lubricant feeding pipe 43 through the lubricant hole 42 of the body member 37 reaches the outer circumferential surface of the outer shaft element 68 of the supporting shaft 16, and moreover, this lubricant is downwardly guided from the outer circumferential surface of the outer shaft element 68 to both of the outer circumferential surface of the outer shaft element 68 of the supporting shaft 16 and the inner circumferential surface of the bearing system 15 through the lubricant guiding grooves 56 and 63, to thereby achieve the circumferential satisfactory lubrication of the outer shaft element 68 and the bearing system 15.

Also, since the lubricant reserving groove 57 of the lubricant supply bushing 49 is provided with the lubricant retaining member 58 therein which keeps infiltrated with a lubricant, the lubricant reserving groove 57 is capable of reserving a lubricant constantly therein over a long period of time. This allows the long-term satisfactory lubrication of the outer circumferential surface of the outer shaft element 68 of the supporting shaft 16 and the inner circumferential surface of the bearing system 15, and ensures the smooth rotating operation of the supporting shaft 16 relative to the inner circumferential surface of the bearing system 15 even if the swinging movement of the shedding cam lever 6 turns the attaching member 14 as a whole.

However, even if the outer circumferential surface of the outer shaft element 68 of the supporting shaft 16 and the inner circumferential surface of the bearing system 15 are lubricated as described in the foregoing, the outer shaft element 68 of the supporting shaft 16 and the bearing system 15 are inevitably worn out or abraded as a result of long-term operation of the weaving machine. In the operation of the weaving machine, the shedding cam lever 6 of the shedding motion 5 draws the connecting wires 7 against the drawing operation of the pulling means 9. Consequently, the outer circumferential surface of the outer shaft element 68 and the outer peripheral surface of the fixed bushing 48 are subjected to great external force particularly in their connecting wires 7 side portions, namely, their left-hand side portions. This causes both surfaces to be still more worn out or abraded.

At this particular time, according to the wear amounts of the outer shaft element 68 and the fixed bushing 48, the pressure spring 53 forces the movable bushing 51 through the slider means 52 in the direction of the fixed bushing 48, while at the same time, the tension spring 54 pulls the engaging member 50 directly, and the engaging member 50 is drawn to the left together with the movable bushing.

As is apparent from this operation of the bearing system according to the first preferred embodiment of the invention, the outer shaft element 68 of the supporting shaft 16 and the bearing system 15 creates no backlash therebetween. Therefore, the bearing system according to the first preferred embodiment of the invention does not raise any problem in which the backlash between the supporting shaft 16 and the bearing system 15 would cause the supporting shaft 16 to undergo reciprocating movement within the bearing system 15 in proportion to the backlash, the connecting wires 7 would be subjected to a positional fluctuation or any other abnormal or extreme vibration and therefore great impact force, whereby the connecting wires 7 would be elongated, and finally, the connecting wires would be ruptured.

Also, the bearing system according to this first preferred embodiment of the invention is arranged to receive external force thereupon by using the fixed bushing 48 rather than the supporting shaft 16. The fixed bushing 48 is greater in the area in which the fixed bushing is secured than the supporting shaft 16, and naturally, the fixed bushing 48 is more bearable against any external force than the supporting shaft 16, while on the other hand, the supporting shaft 16 is securely held.

Figure 15 shows a second preferred embodiment of the present invention. In Figure 15, the lubricant guiding groove 56 of the fixed bushing 48 is ramified in the longitudinally middle thereof. As a result, the lubricant guiding groove 56 comprises a central groove 56a which is located in the upper and transversally central portion of the fixed bushing, and a pair of side grooves 56b which are positioned in both lower and horizontally end portions of the fixed bushing.

Such an arrangement of the lubricating groove on the inner peripheral surface of the fixed bushing allows the middle groove 56a and the side grooves 56b to be transversally spaced therebetween, thereby achieving an axial wider range of lubrication to both the outer circumferential surface of the outer shaft element 68 of the supporting shaft 16 and the inner circumferential surface of the bearing system 15 than in the foregoing first preferred embodiment of the invention.

The foregoing ramification of the lubricating guiding groove may be applied to the lubricating guiding groove 63 on the inner peripheral surface of the movable bushing 51 described and shown in the foregoing first preferred embodiment of the invention, and the lubricating guiding grooves 56 and 63 on the inner peripheral surfaces of the fixed bushing and the movable bushing which will now be described in the other preferred embodiments of the invention.

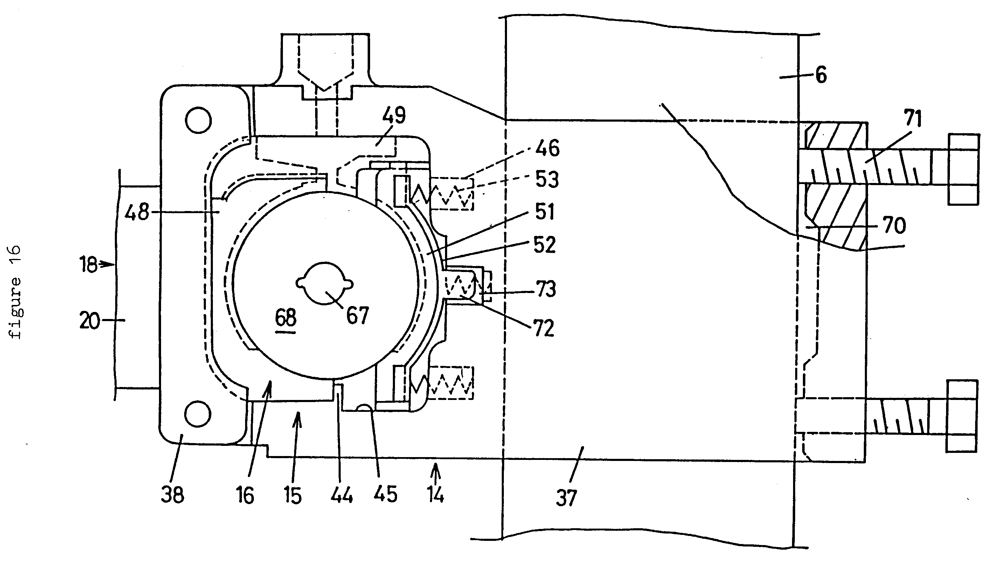

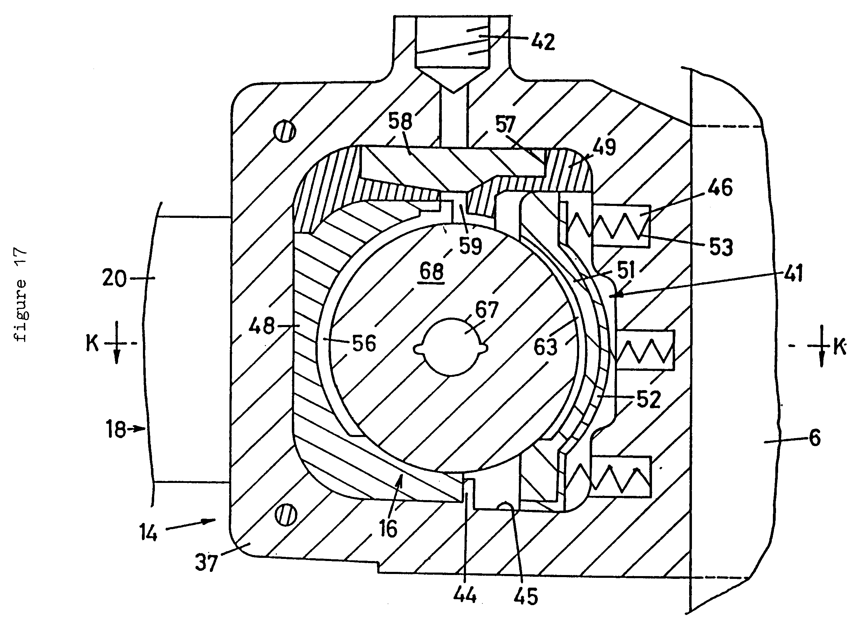

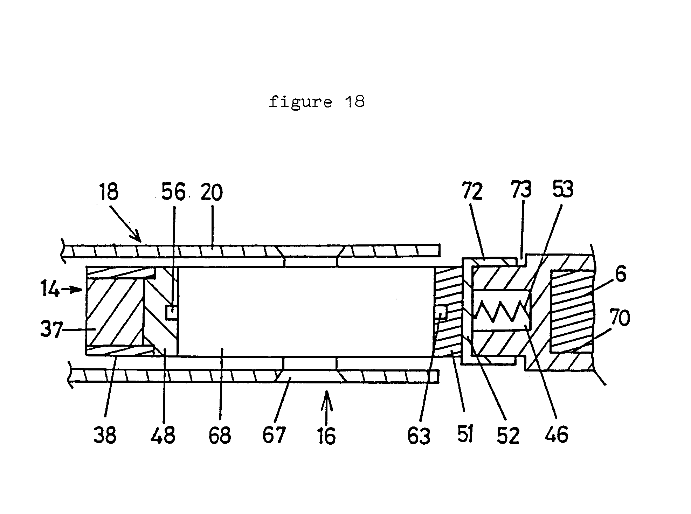

Figures 16 to 18 show a third preferred embodiment of the present invention. In this embodiment of the invention, the attaching member 14 is formed in an elongated rectangular configuration. This attaching member 14 is formed with the bearing inserting aperture 41 of substantially square shape in the left-hand side portion thereof, and an inserting hole 70 for the shedding cam lever 6 in the right-hand side portion thereof. With such an arrangement, the shedding cam lever 6 is detachably fixed by means of bolts 71.

The bearing system 15 is not provided with the engaging member. The slider means 52 is formed with a pair of holding members 72 in the middle thereof so that these holding members 72 hold the attaching member 14 therebetween. The attaching member 14 is correspondingly provided with a recessed portion 73 in which the attaching member 14 is held between the holding members 72. Also, the lower end portion of the slider means 52 is brought in contact with the inner bottom surface of the bearing inserting aperture 41.

The bearing inserting aperture 41 is provided with three spring inserting holes 46 in vertically parallel in the right-hand side inner surface thereof. The pressure springs 53 are disposed between the inner bottom surfaces of the spring inserting holes 46 and the vertically upper, the vertically middle and the vertically lower end portions of the slider means 52 to force the movable bushing through the slider means 52 in the direction of the fixed bushing 48.

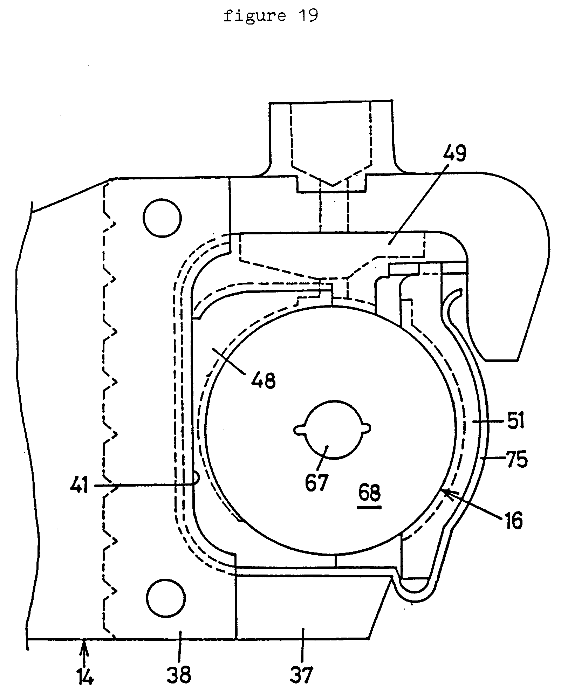

Figure 19 shows a fourth preferred embodiment of the present invention. The bottom wall portion of the attaching member 14 is not formed with the projecting portion and the recessed portion which are indicated at 44 and 45 in the first preferred embodiment of the invention. The bearing system 15 is not provided with the engaging member and the slider means which are respectively indicated at 50 and 52 in the first preferred embodiment of the invention. A plate spring 75 of small thickness is used in the place of the pressure spring and the tension spring which are both employed in the first preferred embodiment of the invention. This plate spring 75 is mounted along the outer peripheral surfaces of the lubricant supply bushing 49 and the fixed bushing 48, the inner bottom surface of the bearing inserting aperture, and the outer peripheral surfaces of the movable bushing 51 to force the movable bushing 51 towards the fixed bushing 48.

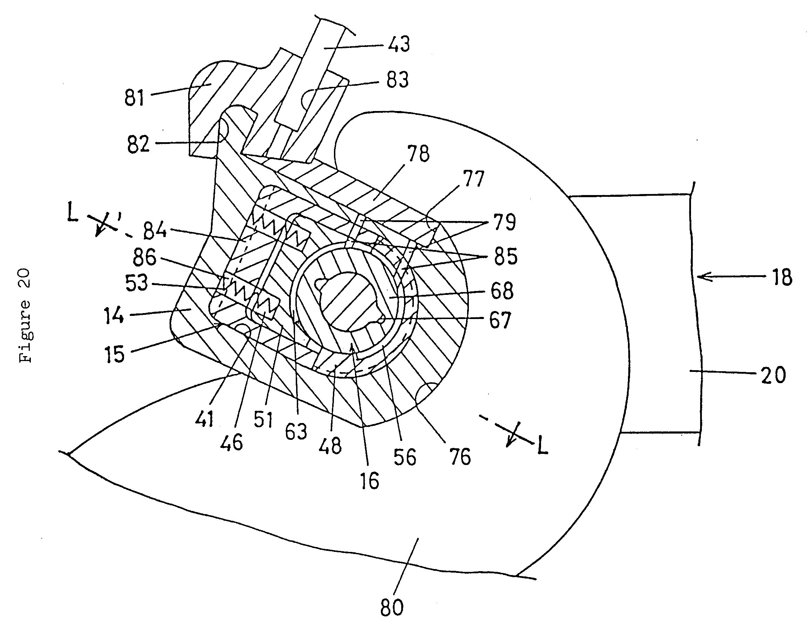

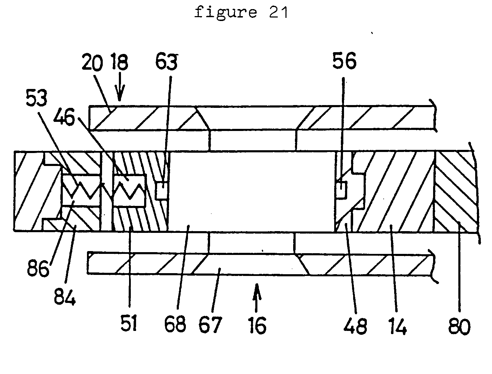

Figures 20 and 21 show a fifth preferred embodiment of the present invention. The attaching member 14 is detachably engaged with an engaging recessed portion 76 of a shedding lever 80 of the shedding motion 5 which is a Dobby machine in this fifth preferred embodiment of the invention. The attaching member 14 is arranged to be hollow in the inside thereof to form the bearing inserting aperture 41 in this inside. Also, the attaching member is formed with a lubricant reserving groove 77 of elongated rectangular shape in the upper surface thereof. This groove 77 has a lubricant retaining member 78 included therein to reserve a lubricant therein. The lubricant reserving groove 77 is also provided with a lubricant feeding passage 79 on the underside of an end portion thereof, which extends to the inside of the bearing inserting aperture 41.

A cap member 81 which is made from Nylon or any other similar elastic or elastomeric material is formed with an engaging recessed portion 82 in the lower portion thereof. This engaging recessed portion 82 is downwardly opened. The top portion of the left-hand end portion of the attaching member 14 is detachably meshed with this engaging recessed portion 82 by using the resilient deformation of the attaching member 81.

Moreover, the underside of the right-hand side lower portion of the cap member 81 gradually becomes more spaced apart, in the right-hand side direction thereof, from the bottom surface of the lubricant reserving groove 77, and is substantially horizontal, to thereby force the end portion of the lubricant retaining member 78 downwardly.

The right-hand side portion of the cap member 81 is formed with a through-hole 83 from the upper end surface thereof to the lower end surface thereof, and this through-hole 83 has a lubricant feeding pipe 43 detachably forced therein.

The bearing system 15 comprises the fixed bushing 48 formed in an arc configuration and fitted in the bearing inserting aperture 41, and a guide member 84 formed in a gate configuration, inserted in the bearing inserting aperture 41, and brought in contact with both end portions of the fixed bushing 48. Moreover, the bearing system also comprises the movable bushing 51 movably located inside the guide member 84, and the pressure springs 53.

The fixed bushing 48 is engaged in the outer peripheral surface thereof with the inner peripheral surface of the bearing inserting aperture 41 to prevent any transversal movement of the fixed bushing 48 in the right-hand side direction.

Also, the fixed bushing 48 is provided with a connecting groove 85 which joins the lubricant feeding passage 79 in the attaching member 14 to the lubricant guiding groove 56 formed between the outer circumferential surface of the supporting shaft 16 and the inner peripheral surface of the fixed bushing 48. The guide member 84 is engaged in the left-hand side end surface thereof with the inner peripheral surface of the bearing inserting aperture 41 to prevent any transversal movement of the guide member 84 in the left-hand side direction. Also, the guide member 84 is provided with a pair of through-holes 86 thereacross, while at the same time, the movable bushing 51 is formed with a pair of spring inserting grooves 46 which correspond in their positions to the through-holes 86, to thereby allow the pressure springs 53 to be inserted between the inside bottom surfaces of the spring inserting grooves 46 and the corresponding inner peripheral surface portions of the bearing inserting aperture 41 so that the movable bushing 51 is pressed in the direction of the fixed bushing.

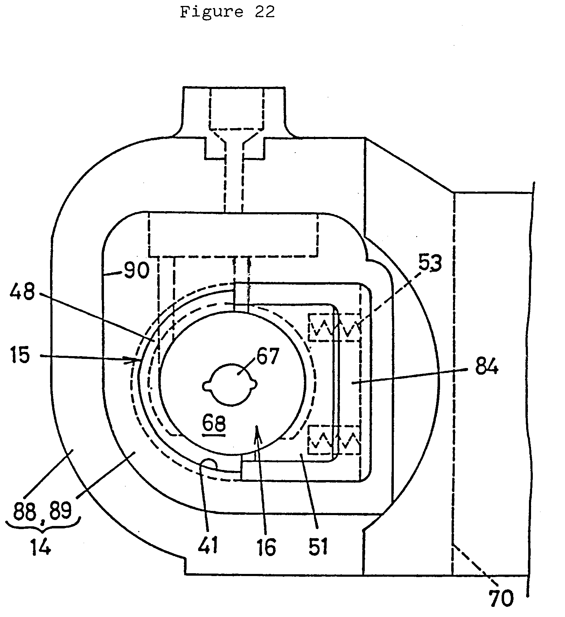

In Figure 22 which shows a sixth preferred embodiment of the present invention, the attaching member 14 comprises two kinds of members substantially as described and shown for the attaching member in the first preferred embodiment of the invention. One member is a bracket 88, and the other member is a body member 89.

The bracket 88 is formed with a fitting aperture of substantially square shape for the body member in the left-hand side portion, and this fitting aperture 90 has the body member 89 detachably inserted therein.

The body member 89 is hollow in the inside portion thereof to allow this inside portion to serve as the bearing inserting aperture 41 as described and shown in the first preferred embodiment of the invention. The bearing system 15 of the substantially same construction as that in the fifth preferred embodiment of the invention is detachably fitted in the bearing inserting aperture 41. The body member 89 is formed with the lubricant reserving groove 77 which is communicatively connected to the lubricant hole 42 of the bracket 88, and the lubricant reserving groove 77 is communicatively connected to the connecting groove 85 of the bearing system 15 through the lubricant feeding passage 79.

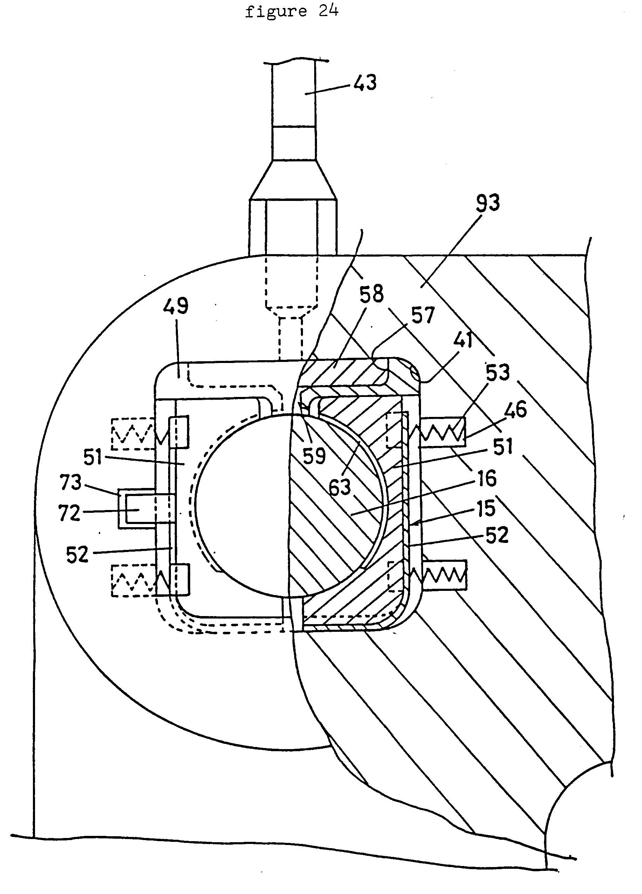

Figures 23 and 24 show a seventh preferred embodiment of the present invention. A weaving machine as illustrated in Figure 23 is of the positive type. As already described in the foregoing, this positive type weaving machine comprises under the harness frame 2 the pair of left-hand side and right-hand side interlocking leverage means 93, 93 of an L-shaped configuration which are pivotally supported by means of the supporting shafts 16. The horizontal linking rod 92 connects both leverage means 93, 93 to each other, and achieves the interlocking operation of the leverage means 93, 93 relative to each other. Each leverage means 93 is connected to the harness frame 2 by using each vertical linking rod 94, while at the same time, the left-hand side leverage means 93 is joined to the shedding lever (not shown) of the shedding motion 5 through the actuating linking rod 95.

Each leverage means 93 is formed with the bearing inserting aperture 41 of substantially square shape in the portion thereof in which the supporting shaft 16 is mounted thereon. This bearing inserting aperture 41 is fitted with the bearing system 15 therein, and this bearing system 15 comprises the lubricant supply bushing 49, a pair of left-hand side and right-hand side movable bushings 51, a pair of left-hand side and right-hand side slider means 52 of an L-shaped configuration which are respectively brought in contact with the outer peripheral side surface and the bottom surface of each movable bushing 51, and the pressure springs 53.

The slider means 52 is formed with a pair of holding members 72 in the middle thereof so that these holding members 72 hold the attaching member 14 therebetween as described and shown in the third preferred embodiment of the the present invention.

The bearing system according to the present invention can also be applied to the automobile engines and the marine engines. Figure 28 shows along with Figures 25 to 27 and 29 an illustrative embodiment wherein a bearing system with springs is applied to the bearing metal which is attached along the inner circumferential surface of the bearing inserting aperture 41a formed by means of the big end portion of the connecting rod 96 and the bearing cap 98 to receive the crankpin 16a of the crankshaft 99. The movable bushings 51a are provided with projecting portions 102,103 on the big end 97 side portion thereof and the bearing cap side 98 portion thereof, and the projecting portions 102,103 are respectively formed with the lubricant feeding hole 59a and the spring inserting groove 46a in their inside portions such that the lubricant feeding hole 59a and the spring inserting groove 46a are concentrically located. The big end portion 97 of the connecting rod 96 and the bearing cap 98 are respectively provided with the spring inserting groove 46b and the lubricant feeding hole 59b which are respectively aligned with the spring inserting groove 46a and the lubricant feeding hole 59a which are both located in the movable bushing 51a. The pressure springs 53 are fitted in the spring inserting grooves 46a and 46b, and a lubricant is fed from the lubricant holes 42a to the outer circumferential surfaces of the movable bushings 51a through the lubricant feeding holes 59a and 59b.

Also, the bearing cap 98 and the big end portion 97 of the connecting rod 96 are provided with engaging recessed portions 103 so that the projecting portions 102 of the movable bushings are meshed with the engaging recessed portions 103.

The foregoing several preferred embodiments of the backlash absorbing mechanism for bearings which is provided according to the present invention have been described with reference to application of this system to the wire connectors in a negative type weaving machine, the leverage means in a positive type weaving machine, and the connecting rod in an automobile or marine engine. However, it will be readily understood by those skilled in the art that the backlash absorbing system of the present invention can be used with many other types of machines or applications in which the shafting and the bearing are used in combination.

As is apparent from the foregoing description, the bearing system of the present invention is free from any risk of a backlash relative to shafting rotatably supported thereon, which on the other hand, inevitably occurs in the conventional type bearings. The backlash between the shafting and the bearing which supports the shafting causes their wear or abrasion to be accelerated. However, since the bearing system of the present invention does not introduce any backlash between this bearing system and the shafting which rests thereon, this bearing system does not cause any accelerative wear or abrasion of the journal portion of the shafting and the shafting supporting portion of the bearing.

The bearing system according to the first preferred embodiment of the present invention comprises the fixed bushing, the movable bushing, and the springs which allow the movable bushing to approach the fixed bushing. In this case, the fixed bushing is secured in the bearing inserting aperture such that it is located more adjacently than the supporting shaft to a portion of the bearing system on which external force acts. Also, the movable bushing is disposed to hold the supporting shaft with the aid of the fixed bushing, and is arranged to be moved in the direction of the fixed bushing. Such an arrangement allows the fixed bushing to sufficiently receive external force which is exerted upon the bearing system.

Also, in the bearing system according to the present invention, the lubricant supply bushing is located between the fixed bushing and the movable bushing or between both movable bushings, the lubricant supply bushing is provided with the lubricant feeding hole which extends downwardly from the bottom thereof to feed a lubricant to the outer circumferential surface of the supporting shaft, the attaching member having the bearing inserting aperture formed therein is provided with the lubricant hole which feeds a lubricant to the lubricant feeding hole extending downwardly from the bottom of the lubricant supply bushing, and the inner peripheral surfaces of the fixed bushing and the movable bushing are respectively formed with the lubricant guiding groove along them to direct along them the lubricant supplied from the downwardly extending lubricant feeding hole of the lubricant supply bushing. This arrangement achieves the satisfactory lubrication of the outer circumferential surface of the shaft as well as the inner peripheral surfaces of the fixed bushing and the movable bushing.

The foregoing lubricant guiding grooves are also arranged to be ramified into two side grooves. This arrangement ensures an axially wider range of lubrication to the outer circumferential `surface of the supporting shaft and the inner circumferential surface of the bearing system.

Although the present invention has been fully described by way of examples with reference to the accompanying drawings, it is to be noted here that various changes and modifications will be apparent to those skilled in the art.

## Claims

1. A bearing arrangement with a backlash absorbing system comprising an attaching member (14) with a bearing inserting aperture (41), a bearing system (15) unrotatably fitted in the bearing aperture (41), and a shaft (16) subjected to diametrical external force, which is rotatably supported on the bearing system;
the bearing system comprising:
a fixed bushing (48) which is located more adjacently than the shaft (16) to a portion thereof on which the external force acts and is fixed within the bearing inserting aperture (41),
a movable bushing (51) which cooperates with the fixed bushing (48) to hold the shaft (16), and is allowed to advance or retreat relative to the fixed bushing (48), and springs (53, 54) which allow the movable bushing (51) to approach the fixed bushing;
characterised in that both circumferential ends of the fixed bushing (48) are spaced from the opposed circumferential ends of the movable bushing (51) so as to define two gaps between the bushings,
each bushing has a lubricant guiding groove (56, 63) which extends from one of the circumferential ends to an end wall proximate the other circumferential end, such that the lubricant guiding grooves are open to one gap and closed with respect to the other gap, and the attaching member (14) includes lubricant supply means to supply lubricant via said one gap to the two lubricant guiding grooves.

2. A bearing arrangement with a backlash absorbing system comprising an attaching member (14) with a bearing inserting aperture (41), a bearing system (15) unrotatably fitted in the bearing aperture (41), and a shaft (16), which is rotatably supported on the bearing system;
the bearing system comprising:
a pair of movable bushings (51) which cooperate with each other to hold the shaft (16) therebetween, and pressure springs (53) which allow both movable bushings (51) to approach each other, both circumferential ends of one movable bushing (51) being spaced from the opposed circumferential ends of the other movable bushing (51) so as to define two gaps between the bushings (51); characterised in that
each bushing (51) has a lubricant guiding groove (56, 63) which extends from one of the circumferential ends to an end wall proximate the other circumferential end, such that the lubricant guiding grooves are open to one gap and closed with respect to the other gap, and
the attaching member (14) includes lubricant supply means to supply lubricant via said one gap to the two lubricant guiding grooves (56, 63).

3. The bearing arrangement with a backlash absorbing system according to claim 1, wherein said spring (53) comprises a compression spring.

4. The bearing arrangement with a backlash absorbing system according to claim 1, wherein said movable bushing (51) includes an end portion with an engaging member (50) engaged therewith, said spring (54) comprising a tension spring connected between said attaching member (14) and the engaging member (50) to bias said movable bushing (51) toward said first bushing (48).

5. The bearing arrangement with a backlash absorbing system according to claim 1, wherein said springs comprise a plate spring (75) surrounding the outer peripheral surfaces of said first bushing (48) and said movable bushing (51).

6. The bearing arrangement with a backlash absorbing system according to any one of claims 1 to 5, wherein said lubricant supply means (49) comprises a lubricant supply bushing (49) between said bushings in said bearing inserting aperture (41), the lubricant supply bushing (49) having a lubricant feeding hole (59) communicating with said lubricating guiding grooves (56, 63), and a lubricant hole (42) in said attaching member (14) communicating with said lubricant supply bushing (49).

7. The bearing arrangement with a backlash absorbing system according to claim 6, wherein said lubricant supply bushing (49) has a lubricant retainer (58) therein.

8. The bearing arrangement with a backlash absorbing system according to claim 1, 3, 4, 5 or claims 6 and 7 when dependent on claims 1, 3, 4 or 5, wherein said movable bushing (51) has an engaging member (50) engaged therewith at one end thereof and a spring aperture (46) is provided in said attaching member (14) adjacent the opposite end of said movable bushing (51), said spring (53) comprising a first compression spring in said spring aperture (46) engaging said opposite end and a tension spring connected between said engaging member (50) and said attaching member (14).

9. The bearing arrangement with a backlash absorbing system according to claim 1 or 2, wherein said spring comprises three compression springs disposed between said movable bushing (51) and said attaching member (14).

10. The bearing arrangement with a backlash absorbing system according to claim 1 or 2, wherein at least one said lubricant guiding groove is located centrally along the longitudinal circumferential extent thereof.

## Patentansprüche

1. Lageranordnung mit einem Spielausgleichssystem mit einer Lageraufnahmeöffnung, bestehend aus einem Befestigungsglied (14) mit einer Lageraufnahmeöffnung (41), einem nicht drehbar in die Lageraufnahmeöffnung eingepaßten Lagersystem 15) und einer Welle (16), die einer diametral wirkenden äußeren Kraft ausgesetzt und drehbar in dem Lagersystem gelagert ist. Das Lagersystem besteht aus: einer feststehenden Buchse (48), die sich näher als die Welle (16) an einem Teil des Lagersystems befindet, auf den die äußere Kraft wirkt, und in der Lageraufnahmeöffnung (41) fixiert ist,
eine bewegliche Buchse (51), die mit der feststehenden Buchse (48) zusammenwirkt, um die Welle (16) in Position zu halten, und sich in bezug auf die feststehende Buchse (48) nach vorne bzw. hinten bewegen kann, und Federn (53,54), die eine Annäherung der beweglichen Buchse (51) an die feststehende Buchse ermöglichen, und dadurch gekennzeichnet sind, daß beide Umfangsenden der feststehenden Buchse (48) im Abstand zu den gegenüberliegenden Umfangsenden der beweglichen Buchse (51) liegen, so daß zwei Zwischenräume zwischen den Buchsen definiert werden;
jede Buchse besitzt eine Schmiermittel-Führungsnut (56, 63), die von einem der Umfangsenden zu einer Stirnwand in der Nähe des anderen Umfangsendes verläuft, so daß die Schmiermittel-Führungsnuten zu einem Zwischenraum hin offen und zum anderen Zwischenraum hin geschlossen sind, und das Befestigungsglied (14) enthält ein Schmiermittelzufuhr-Mittel, das das Schmiermittel über den beschriebenen einen Zwischenraum zu den beiden Schmiermittel-Führungsnuten führt.

2. Lageranordnung mit einem Spielausgleichssystem, bestehend aus einem Befestigungsglied (14) mit einer Lageraufnahmeöffnung (14), einem nicht drehbar in die Lageraufnahmeöffnung (41) eingepaßten Lagersystem (15) und einer Welle (16), die drehbar in dem Lagersystem gelagert ist. Das Lagersystem besteht aus:
einem Paar beweglicher Buchsen (51), die zusammenwirken, um die Welle (16) zwischen den Buchsen in Position zu halten, und
Druckfedern (53), die eine Annäherung der beiden beweglichen Buchsen (51) aneinander ermöglichen, wobei beide Umfangsenden der einen beweglichen Buchse (51) im Abstand zu den gegenüberliegenden Umfangsenden der anderen beweglichen Buchse (51) liegen, so daß zwei Zwischenräume zwischen den Buchsen entstehen;
jede Buchse (51) besitzt eine Schmiermittel-Führungsnut (56,63), die von einem Umfangsende zu einer Stirnwand in der Nähe des anderen Umfangsendes verläuft, so daß die Schmiermittel-Führungsnuten zu einem Zwischenraum hin offen und zum anderen Zwischenraum hin geschlossen sind, und das Befestigungsglied (14) enthält eine Schmiermittelzufuhr-Vorrichtung, die das Schmiermittel über den beschriebenen einen Zwischenraum zu den beiden Schmiermittel-Führungsnuten (56, 63) führt.

3. Lageranordnung mit einem Spielausgleichssystem nach Anspruch 1, wobei die beschriebene Feder (53) eine Druckfeder umfaßt.

4. Lageranordnung mit einem Spielausgleichssystem nach Anspruch 1, wobei die beschriebene bewegliche Buchse (51) ein Stirnteil mit einem mit diesem im Eingriff stehenden Formschlußglied (50) enthält und die beschriebene Feder (54) eine Spannfeder umfaßt, die eine Verbindung zwischen dem beschriebenen Befestigungsglied (14) und dem Formschlußglied (50) herstellt, um die beschriebene bewegliche Buchse (51) zur beschriebenen ersten Buchse (48) hin zu spannen.

5. Lageranordnung mit einem Spielausgleichssystem nach Anspruch 1, wobei die beschriebenen Federn eine Blattfeder (75) umfassen, die die äußeren peripheren Oberflächen der beschriebenen ersten Buchse (48) und der beschriebenen beweglicher Buchse (51) umgeben.

6. Lageranordnung mit einem Spielausgleichssystem nach einem der Ansprüche 1 bis 5, wobei das beschriebene Schmiermittelzufuhr-Mittel (49) eine Schmiermittelzufuhr-Buchse (49) zwischen den beschriebenen Buchsen in der beschriebenen Lageraufnahmeöffnung (41) umfaßt, wobei die Schmiermittelzufuhr-Buchse (49) eine Schmiermittelzufuhr-Öffnung (59) besitzt, die mit den beschriebenen Führungsnuten (56, 63) in Verbindung steht, und eine Schmiermittelöffnung (42) in dem beschriebenen Befestigungsglied, die mit der beschriebenen Schmiermittelzufuhr-Buchse (49) in Verbindung steht.

7. Lageranordnung mit einem Spielausgleichssystem nach Anspruch 6, wobei die beschriebene Schmiermittelzufuhr-Buchse (49) innen mit einem Schmiermittel-Rückhalteelement (58) versehen ist.

8. Lageranordnung mit einem Spielausgleichssystem nach einem der Ansprüche 1, 3, 4, 5 oder Anspruch 6 und 7 in Abhängigkeit von den Ansprüchen 1, 3, 4 oder 5, wobei die beschriebene bewegliche Buchse (51) mit einem Formschlußglied (50) ausgestattet ist, das an einem Ende mit dieser im Eingriff steht, und eine Federöffnung (46) in dem beschriebenen Befestigungsglied (14) neben dem gegenüberliegenden Ende der beschriebenen beweglichen Buchse (51) vorgesehen ist, wobei die beschriebene Feder (53) eine erste Druckfeder in der beschriebenen Federöffnung (46) umfaßt, die mit dem beschriebenen gegenüberliegenden Ende in Eingriff steht, und eine Spannfeder, die zwischen dem beschriebenen Formschlußglied (50) und dem beschriebenen Befestigungsglied (14) angebracht ist.

9. Lageranordnung mit einem Spielausgleichssystem nach Anspruch 1 oder 2, wobei die beschriebene Feder drei Druckfedern umfaßt, die zwischen der beschriebenen beweglichen Buchse (51) und dem beschriebenen Befestigungsglied (14) angebracht ist.

10. Lageranordnung mit einem Spielausgleichssystem nach Anspruch 1 oder 2, wobei mindestens eine der beschriebenen Schmiermittel-Führungsnuten in der Mitte von deren Längsumfang angebracht ist.

## Revendications

1. Une disposition de palier dotée d'un système d'absorption du jeu comprenant un membre annexe (14) doté d'un alésage d'insertion de palier (41), un système de palier (15) adapté de façon fixe dans l'alésage de palier (41), et un arbre (16) soumis à des forces externes diamétrales, dont la rotation est portée par le système de palier ;
le système de palier comprenant :
une bague fixe (48) qui est située de façon plus adjacente que l'arbre (16) à une partie de celui-ci sur laquelle agit la force extérieure et qui est fixée dans l'alésage d'insertion de palier (41),
une bague mobile (51) solidaire de la bague fixe (48) pour porter l'arbre (16), et qui peut avancer ou reculer par rapport à la bague fixe (48), et des ressorts (53, 54) qui permettent à la bague mobile (51) d'approcher de la bague fixe ;
caractérisé en cela que les deux extrémités de la circonférence de la bague fixe (48) sont espacées par rapport aux extrémités de la circonférence opposées de la bague mobile (51) de façon à définir deux jeux entre les bagues, chaque bague ayant une gorge de graissage (56, 63) qui s'étend d'une extrémité de la circonférence à une paroi d'extrémité proche de l'autre extrémité de la circonférence, de telle façon que les gorges de graissage soient ouvertes par rapport à un jeu et fermées par rapport à l'autre jeu, et le membre annexe (14) comporte des moyens de graissage permettant d'alimenter le lubrifiant à travers ledit jeu aux deux gorges de graissage.

2. Une disposition de palier dotée d'un système d'absorption du jeu comprenant un membre annexe (14) doté d'un alésage d'insertion de palier (41), un système de palier (15) adapté de façon fixe dans l'alésage de palier (41), et un arbre (16) soumis à des forces externes diamétrales, dont la rotation est portée par le système de palier ;
le système de palier comprenant :
une paire de bagues mobiles (51) agissant solidairement pour porter l'arbre (16) entre elles, et des ressorts de pression (53) qui permettent aux deux bagues mobiles (51) de s'approcher l'une de l'autre, caractérisé en cela que les deux extrémités de la circonférence d'une bague mobile (51) sont espacées des extrémités de la circonférence opposées de l'autre bague mobile (51) de façon à définir deux jeux entre les bagues (51) ;
chaque bague (51) comporte une gorge de graissage (51, 63) qui s'étend d'une extrémité de la circonférence à une paroi d'extrémité proche de l'autre extrémité de la circonférence, de telle façon que les gorges de graissage sont ouvertes par rapport à un jeu et fermées par rapport à l'autre jeu, et le membre annexe (14) comporte un moyen de graissage qui alimente le lubrifiant par l'intermédiaire dudit jeu aux deux gorges de graissage (53, 63).

3. La disposition de palier dotée d'un système d'absorption du jeu selon la revendication 1, dans laquelle ledit ressort (53) comprend un ressort de compression.

4. La disposition de palier dotée d'un système d'absorption du jeu selon la revendication 1, dans laquelle ladite bague mobile (51) comprend une partie d'extrémité avec un membre d'engagement (50) engagé dans celle-ci, ledit ressort (54) comprenant un ressort de tension connecté entre ledit membre annexe (14) et le membre d'engagement (50) pour forcer ladite bague mobile (51) vers ladite première bague (58).

5. La disposition de palier dotée d'un système d'absorption du jeu selon la revendication 1, dans laquelle lesdits ressorts comprennent un ressort à lames (75) entourant les surfaces périphériques extérieures de ladite première bague (48) et de ladite bague mobile (51).

6. La disposition de palier dotée d'un système d'absorption du jeu selon n'importe laquelle des revendications 1 à 5, dans laquelle ledit moyen de graissage (49) comprend une bague de graissage (49) située entre lesdites bagues dans ledit alésage d'insertion de palier (41), la bague de graissage (49) comportant un trou de graissage (59) en communication avec lesdites gorges de graissage (56, 63), et un trou de graissage (42) aménagé dans ledit membre annexe (14) en communication avec ladite bague de graissage (49).

7. La disposition de palier dotée d'un système d'absorption du jeu selon la revendication 6, dans laquelle ladite bague de graissage (49) comporte une retenue de lubrifiant (58) dans sa partie interne.

8. La disposition de palier dotée d'un système d'absorption du jeu selon les revendications 1, 3, 4, 5 ou les revendications 6 et 7 quand elles dépendent des revendications 1, 3, 4 ou 5, dans lesquelles ladite bague mobile (51) comporte un membre d'engagement (50) engagé à une de ses extrémités et une ouverture de ressort (46) aménagée dans ledit membre annexe (14) adjacente à l'extrémité opposée de ladite bague mobile (51), ledit ressort (53) comprenant un premier ressort de compression dans ladite ouverture de ressort (46) engageant ladite extrémité opposée et un ressort de tension connecté entre ledit membre d'engagement (50) et ledit membre annexe (14).

9. La disposition de palier dotée d'un système d'absorption du jeu selon la revendication 1 ou la revendication 2, dans laquelle ledit ressort comprend trois ressorts de compression disposés entre ladite bague mobile (51) et ledit membre annexe (14).

10. La disposition de palier dotée d'un système d'absorption du jeu selon la revendication 1 ou la revendication 2, dans laquelle au moins une desdites gorges de graissage est située centralement sur toute sa circonférence longitudinale.
